# EUROPEAN PATENT APPLICATION

(11) **EP 1 439 321 A1**
(43) Date of publication of application: **21.07.2004**
(21) Application number: 03079121.4
(22) Date of filing: 18.12.2003
(51) Int. Cl.: F16F 13/26

(54) **Controllable decoupler**

(30) Priority: 14.01.2003 US 341680
(71) Applicant: Delphi Technologies, Inc., Troy, MI 48007 (US)
(72) Inventor: Bodie, Mark Olen, Dayton, Oh 45410 (US); Long, Mark Wayne, Bellbrook, OH 45305 (US); Tewani, Sanjiv Gobind, Lebanon, OH 45036 (US)
(74) Representative: Denton, Michael John

(57) **Abstract**

A powertrain mount (10) comprises an orifice plate (20) and a rotatable track member (30). The orifice plate (20) has an opening, a first surface (22) sloping toward the opening, and an inner surface (24). The rotatable track member (30) has an outer surface (34) proximate the first surface (22) of the orifice plate (20), and the outer surface (34) of the rotatable track member (30) has an opening (36). A compliant member (50) is positioned adjacent the orifice track for isolating and damping amplitudes of vibration frequencies, as an amplitude dependent device. For small amplitudes, the compliant member (50) takes up displaced fluid within the mount (10); whereas, large amplitudes the compliant member (50) is bottomed out, forcing displaced fluid through the orifice track or into the molded assembly (14) of the mount.

## Description

### TECHNICAL FIELD OF THE INVENTION

The present invention relates to powertrain mounts for motor vehicles, and more particularly to a powertrain mount having a controllable compliant member.

### BACKGROUND OF THE INVENTION

It is desirable to provide motor vehicles with improved operating smoothness by damping and/or isolating powertrain vibrations of the vehicle. A variety of mount assemblies are presently available to inhibit such engine and transmission vibrations. Hydraulic mount assemblies of this type typically include a reinforced, hollow rubber body that is closed by a resilient diaphragm so as to form a cavity. This cavity is separated into two chambers by a plate. A first or primary chamber is formed between the orifice plate and the body, and a secondary chamber is formed between the plate and the diaphragm.

The chambers may be in fluid communication through a relatively large central passage in the plate, and a decoupler may be positioned in the central passage of the plate disposed about the passage to reciprocate in response to the vibrations. The decoupler movement alone accommodates small volume changes in the two chambers. When, for example, the decoupler moves in a direction toward the diaphragm, the volume of the portion of the decoupler cavity in the primary chamber increases and the volume of the portion in the secondary chamber correspondingly decreases, and vice-versa. In this way, for certain small vibratory amplitudes and generally higher frequencies, fluid flow between the chambers is substantially avoided and undesirable hydraulic damping is eliminated. In effect, the decoupler is a passive tuning device.

As an alternative or in addition to the relatively large central passage, an orifice track is normally provided. The orifice track has a relatively small, restricted flow passage extending around the perimeter of the orifice plate. Each end of the track has an opening, with one opening communicating with the primary chamber and the other with the secondary chamber. The orifice track provides the hydraulic mount assembly with another passive tuning component, and when combined with the decoupler, provides at least three distinct dynamic operating modes. The particular operating mode is primarily determined by the flow of fluid between the two chambers.

More specifically, small amplitude vibrating input, such as from relatively smooth engine idling or the like, produces no damping due to the action of the decoupler, as explained above. In contrast, large amplitude vibrating inputs, such as large suspension inputs, produce high velocity fluid flow through the orifice track, and an accordingly high level of damping force and desirable control and smoothing action. A third or intermediate operational mode of the mount occurs during medium amplitude inputs experienced in normal driving and resulting in lower velocity fluid flow through the orifice track. In response to the decoupler switching from movement in one direction to another in each of the modes, a limited amount of fluid can bypass the orifice track by moving around the edges of the decoupler, smoothing the transition.

Prior decoupled powertrain mount designs continually engaged the decoupler during compressions of the mount during fluid flow through the orifice plate. Thus, prior designs indiscreetly employ decouplers to manage fluid flow within and counteract vibrations within the powertrain.

In some vehicle states, such as high-speed shake, it is advantageous to provide damping for small amplitude vibrations. During high-speed shake conditions, small imbalances in the vehicle's wheels excite the powertrain, which result in vibrations inside the cabin of the vehicle. By controlling the powertrain, providing damping, the vibrations inside the cabin of the vehicle are reduced. Also, if a dynamic rate dip mounts is used to provide isolation at some vehicle state, such as during idle conditions, it is advantageous to remove the decoupler. The dynamic rate dip occurs because of the fluid resonance in the orifice track. When a decoupler is employed a portion of the fluid will flow into the decoupler and not into the orifice track, which reduces the effectiveness of the dynamic rate dip.

It is desirable, therefore, to provide a powertrain mount that overcomes these and other disadvantages.

### SUMMARY OF THE INVENTION

The present invention is a powertrain mount comprising an orifice plate, a rotatable track member, and an enclosed compliant member therein. The orifice plate has an opening, a first surface sloping toward the opening, and an inner surface. The rotatable track member has an outer surface proximate the first surface of the orifice plate, and the outer surface of the rotatable track member has an opening. A compliant member is positioned adjacent the orifice track for isolating and damping amplitudes of vibration frequencies. Rotation of the rotatable track member and its associated opening provides control for engaging the compliant member.

Accordingly, one aspect of the present invention provides a method for isolating and damping vibration disturbance frequencies within a powertrain mount by first determining vibration disturbance frequencies, then determining a response to the frequencies to rotate a rotatable track member to engage a compliant member within and orifice track to compensate for or take up displaced fluid within the mount during vibrations and compressions.

Another aspect of the present invention is to provide an powertrain mount of the type described above in which specific ranges of amplitude frequencies of the powertrain are isolated or damped by selectively rotating the rotatable track member to engage or disengage a compliant member within the orifice track.

The foregoing and other features and advantages of the invention will become further apparent from the following detailed description of the presently preferred embodiments, read in conjunction with the accompanying drawings. The detailed description and drawings are merely illustrative of the invention rather than limiting, the scope of the invention being defined by the appended claims and equivalents thereof.

### BRIEF DESCRIPTION OF THE DRAWING

**FIG. 1** is an exploded perspective view of one embodiment of a powertrain mount in accordance with the present invention;
**FIG. 2** is an exploded perspective view of a portion of the powertrain mount of FIG. 1, including a controllable decoupler in accordance with the present invention;
**FIG. 3a** is top perspective view of the orifice plate incorporating one embodiment of the compliant member.
**FIG. 3b** is top perspective view of the orifice plate incorporating another embodiment of the compliant member; and
**FIG. 4** is a block diagram of a method of isolating and damping powertrain vibration disturbance frequencies in accordance with one embodiment of the present invention.

### DETAILED DESCRIPTION OF THE PRESENTLY PREFERRED EMBODIMENTS

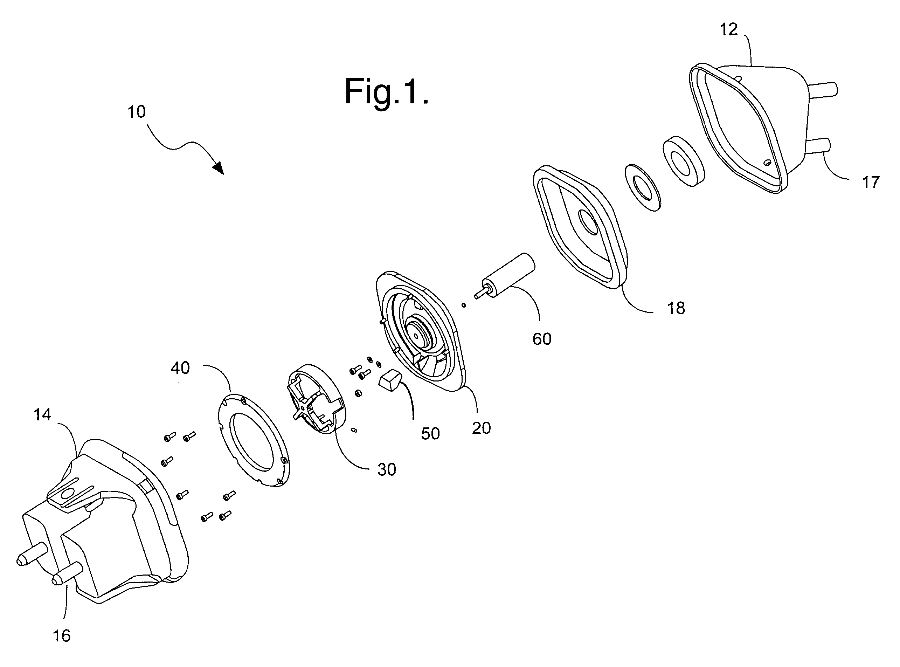

**FIG. 1** shows a hydraulic mount assembly **10** according to the present invention. The mount assembly **10** is particularly adapted for mounting an internal combustion engine and/or transmission to a frame in a motor vehicle. The mount assembly **10** includes a metal base plate **12** and a molded body **14**. The molded body **14** has an elastomeric portion molded around a metal substrate, and includes a plurality of studs **16** projecting outwardly to attach the molded body to the engine or transmission. The base plate **12** is similarly equipped with a plurality of outwardly projecting studs **17** to attach the base plate to the frame.

The base plate **12** and the molded body **14** are configured and joined to form a hollow cavity for receiving a damping liquid such as a glycol fluid. An elastomeric diaphragm **18** of natural or synthetic rubber is attached around its perimeter to the base plate **12** and/or to the body **14**, and extends across the cavity. The diaphragm **18** may include an annular rim section having a radially inwardly facing internal groove formed between upper and lower shoulders such as is described in U.S. Patent No. 5,263,693, the disclosure of which is hereby incorporated by reference. The shoulders are normally flexible so as to sealingly receive the periphery of a die-cast metal or plastic orifice plate **20**.

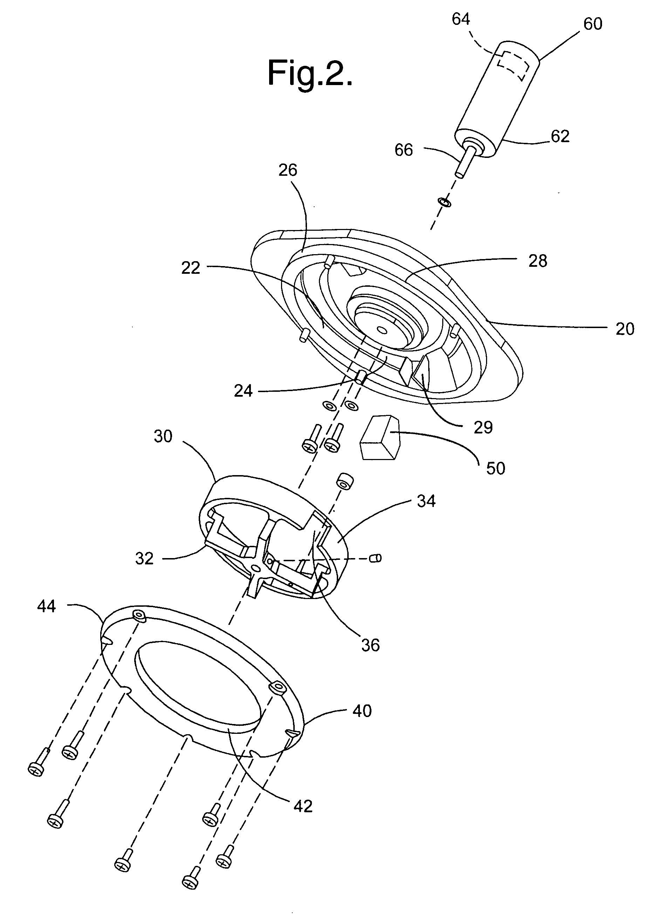

The orifice plate **20** spans the cavity to define a primary chamber and a secondary chamber, as is well known. The orifice plate **20** includes a spiraling surface **22**, best seen in **FIG. 2**, and a circular wall **24** that is preferably situated generally perpendicularly to the surface **22**. A rotatable track member **30** is held against the orifice plate **20** and in close proximity to the wall **24** by a containment plate **40**. An inside diameter **42** of the containment plate **40** is sized to be closely received over legs **32** of the track member **30**, while an outside diameter **44** of the containment plate is fastened to a raised rim **26** of the orifice plate.

In **FIG. 1**, an orifice track is thus defined by a generally circular outer surface **34** of the rotatable or track member **30** opposed to a generally circular or tapering inner surface **27** of the orifice plate, and the surface **22** opposed to the containment plate. The orifice track permits the flow of fluid between the primary and secondary chambers. An opening **36** is provided within the rotatable track member **30**, and an opening **28** is provided within the orifice plate **20** to promote fluid flow within the orifice track and through the mount. Because the surface **22** slopes downwardly toward the orifice plate opening or exit **28**, and because the inner surface **27** may widen as it approaches the exit of the orifice plate, the cross-sectional area of the orifice track changes throughout its length and is a maximum at the exit.

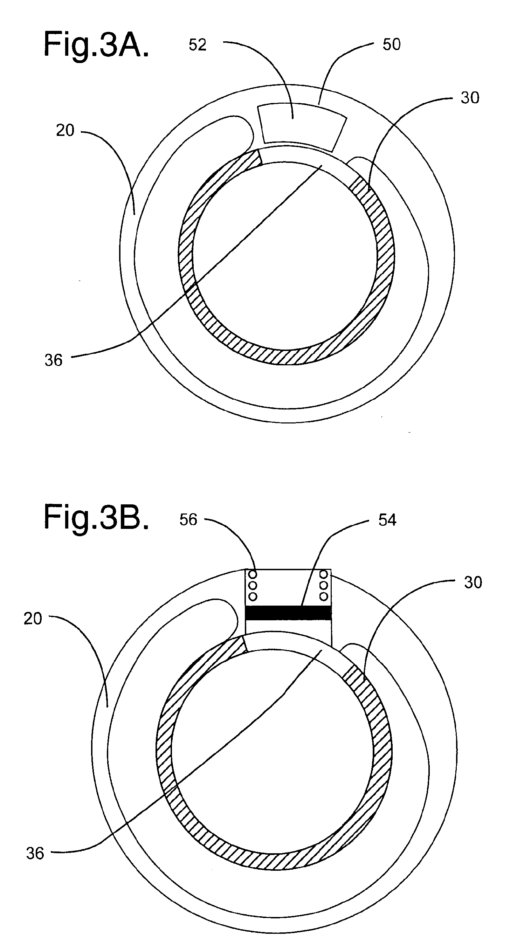

Within mount assembly **10**, a compliant member **50** is provided within the orifice plate **20**, adjacent to the orifice track. Compliant member or decoupler **50** is generally composed of a compliant material of varying dimension, such as, for example, closed cell foam or rubber, for taking up fluid displacement within a closed system. In addition to the type of material, the dimension of the decoupler **50** may include a void enclosure such as an open or closed cavity **52** for taking up displacement as shown in **FIG. 3a**. For a closed cavity design **52**, the compliant member **50** encloses a predetermined amount of void space, sufficient for compensating vibrations within the mount. An open cavity design includes features of a cup or a bladder, having an opening **52** for example, an air chamber, for receiving fluid from the primary chamber and passing it to the secondary chamber. In another embodiment, a sealed cup **54** with an integrated spring reinforcement **56** is used as decoupler **50**, as shown in **FIG. 3b**. Within these embodiments, the decoupler **50** could communicate between the primary chamber and the secondary chamber, or the decoupler **50** could communicate between the primary chamber and an air/gas chamber.

The compliance of the decoupler (or the decoupler material) is generally much less than that of the material used for the molded assembly **14**, depending on design. The dimension of the compliant member **50** is generally designed with respect to the compliant material used and the orifice plate dimensions, while maintaining fluid flow between the chambers. In one embodiment, a housing structure **29** is formed within the orifice plate along the orifice track, best seen in **FIG. 2**. Housing member **29** is formed to receive and confine compliant member **50** within the orifice plate to maintain and promote fluid flow within the mount. Similar to the compliant member **50**, housing structure **29** may be of various dimensions but is generally formed within the orifice plate **20** using materials similar to that of the orifice plate **20**. Use of such a compliant member enhances orifice plate design and may be used to shorten the orifice track. Upon rotation of rotatable track member **30**, fluid may be directed at compliant member **50** for pre-determined vibration frequencies within the powertrain for isolation and damping of the vibrations.

Referring now to **FIG. 2**, a motor assembly **60** is also provided including an electric motor **62** and an encoder **64**. The motor **62** includes a shaft **66** that extends through the containment plate **40** and engages the rotatable track member **30**. The encoder **64** measures the angular position of the track member **30**, and communicates that information to a controller (not shown). The controller also receives additional signals such as, for example, an engine rpm signal from a powertrain controller (not shown), and determines the vibration disturbance frequency. The controller then determines the desired angle of rotation of the track member **30** to align opening **36** with the decoupler **50** to control and reduce the dynamic stiffness associated with the mount **10** at the disturbance frequency. The controller minimizes the difference between the desired angle of rotation and the angle measured from the encoder **64** by applying a voltage to the motor **62**. Therefore, the controller functionally determines vibration frequencies and activates the motor **62** to rotate the track member **30** to further align the track member opening **36** for engaging or disengaging the compliant member **50** with fluid within the powertrain mount assembly **10**. The controller also may be used to control fluid flow through the rotatable track member opening **36**, the orifice track, and the orifice plate opening **28**.

During compression of the mount, fluid can be displaced into the orifice track, the compliant member **50**, and into the molded assembly **14**, or a combination thereof for isolating and damping disturbance vibration frequencies. The amplitude of the powertrain vibration determines the magnitude of the fluid flow within the mount. Fluid may therefore be directed at the decoupler **50** by rotating the opening **36** of the rotatable track member **30**, which is operably attached to the motor assembly **60**. By engaging the compliant member **50**, specific volumes of displaced fluid within the mount may be taken up by the compliant properties of the decoupler **50**. For volumes of fluid that exceed the compressibility of the compliant member, fluid is directed through the orifice track or into the molded assembly **14**. Alternately, the compliant member may be disengaged by rotation of the opening **36** of the rotatable track member **30**.

For example, at frequencies higher than orifice track resonance frequency, minimal flow of fluid occurs within the orifice track and, therefore, fluid must flow into either the compliant member **50** or into the molded assembly **14**. For small volumes of fluid, the decoupler **50** takes up a majority of the flow, reducing the pressure in the chamber of the molded assembly **14**. For larger displacements within the mount, the volume of displaced fluid is increased. Higher volumes of fluid exceed the compressibility of the compliant member **50**, forcing the compliant member to bottom out. Fluid is therefore forced into either the orifice track or molded body **14**. When fluid flows through the orifice track damping is provided. Thus, for small amplitudes the compliant member **50** takes up displaced fluid; whereas, large amplitudes the compliant member **50** bottoms out and displaced fluid is forced into either the orifice track or the molded assembly **14**.

At other vibration frequencies, such as idle conditions, fluid displacements within the mount are small. In such cases, it may be desirable to have fluid flow into the orifice track since the inertia effect of the fluid flow generates a dynamic rate dip, improving the isolation of the mount. Therefore the compliant member **50** may be disengaged at idle conditions by rotating the rotatable track member **30**, closing off the compliant member **50**, shortening the orifice track, and directing all displaced fluid into the orifice track. In yet another mode, such as driving conditions and small amplitude vibrations, the compliant member **50** is engaged to improve isolation. In this mode the rotatable track member **30** re-aligns itself and its associated opening **36** to the location of the compliant member, while lengthening the orifice track for improved damping. For small amplitudes, displaced fluid is taken up by exposing the compliant member **50** to fluid from the molded assembly **14**. As such, the decoupler **50** short-circuits or precludes the engagement of the orifice track for small displacements. For large displacements, the exposure of fluids bottoms out the decoupler **50**, forcing fluid into the orifice track and the molded assembly for damping. Within the present invention, a single track is provided within the mount for handling both isolation and damping.

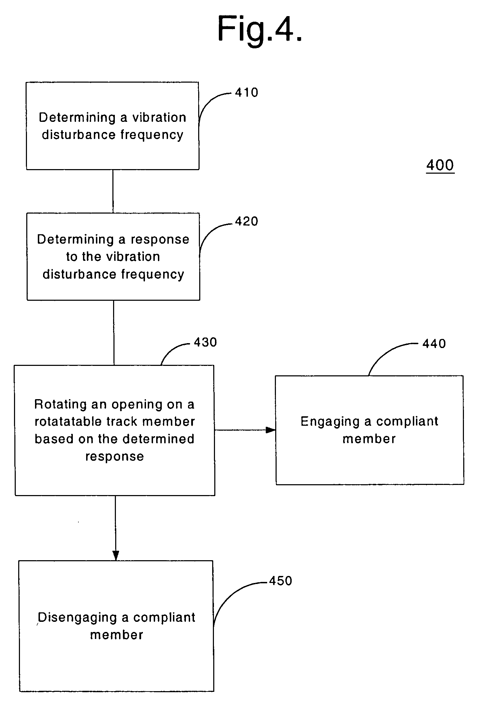

Fluid may be directed at the decoupler **50** by rotating the opening **36** of the rotatable track member **30**, which is operably attached to the motor assembly **60**. **FIG. 4** illustrates one embodiment of a method **400** of controlling the compliance of the decoupler as a function of the vehicle state. The method may be viewed as a controller or a device that is capable of measuring and analyzing powertrain vibrations. The method illustrated in FIG. 4 begins by determining vibration disturbance frequencies (Block **410**), which may include engine rpm, and internal and external responses to the engine environment. The method continues by determining a response to the determined vibration frequencies (Block **420**). The response may be based on pre-determined threshold frequencies for various powertrain designs. The response is then communicated to a motor assembly, that rotates the track member to align the opening of the rotatable track member with a compliant member in response to the determined frequencies (Block **430**), allowing or preventing fluid engagement of the compliant member. The track member may be rotated to allow fluid to flow into the compliant member, whereby the powertrain mount compressedly engages the decoupler to isolate and dampen the effect of vibrations (Block **440**). Alternately, the rotatable track member may be rotated to disengage the compliant member based on various amplitudes of vibration frequencies (Block **450**). In yet another embodiment of the method, the opening of the rotatable track member may be rotated to allow fluid low within the orifice track for specific vibrations and amplitudes.

While the embodiment of the invention disclosed herein is presently considered to be preferred, various changes and modifications can be made without departing from the spirit and scope of the invention. The scope of the invention is indicated in the appended claims, and all changes that come within the meaning and range of equivalents are embraced therein.

## Claims

1. A powertrain mount comprising:
an orifice plate (20) including an orifice track, and an orifice plate opening (28) formed in the orifice track;
a rotatable track member (30) rotatably attached to the orifice plate, the rotatable track member (30) including a fluid opening (36);
a compliant member (50) positioned adjacent to the orifice track, wherein the rotatable track member (30) is positionable to align the rotatable track member (30) opening with the compliant member (50).

2. The powertrain mount of claim 1 further comprising:
a housing member (29) formed within the orifice plate (20) to confine the compliant member (50) within the orifice track.

3. The powertrain mount of claim 2 further comprising:
a containment plate (40) attached to the orifice plate, retaining the rotatable track member (30) against the orifice plate (20).

4. The powertrain mount of claim 3 further comprising:
a motor assembly (60) operably attached to the rotatable track member (30), the motor assembly including a motor (62) and an encoder (64); and
a controller operably coupled to the encoder (64), wherein the encoder measures an angular position of the rotatable track member (30) and communicates with the controller, and the controller determining vibration frequencies and rotating the motor (62) to rotate the rotatable track member (30) and align the opening of the rotatable track member (30) with the compliant member (50).

5. The powertrain mount of claim 4 wherein the compliant member (50) comprises a closed cell foam material capable of compensating displaced fluid within the powertrain.

6. The powertrain mount of claim 5 wherein the compliant member (50) further comprises a pre-determined dimension.

7. The powertrain mount of claim 4 wherein the compliant member (50) comprises a rubber bladder including a closed cavity (52)..

8. A method for isolating and damping powertrain vibration disturbance frequencies, the method comprising:
determining a vibration disturbance frequency (410);
determining a response to the vibration disturbance frequency (420); and
rotating an opening on a rotatable track member operably engaged with an orifice plate based on the determined response (430).

9. The method according to claim 8 further comprising:
engaging a compliant member adjacent an orifice track formed within the orifice plate with fluid via the opening of the rotatable track member (440).

10. The method of claim 8, further comprising:
providing an orifice track wherein the compliant member is confined at a pre-determined location on the orifice track.

11. The method of claim 10, further comprising:
aligning the rotatable track member opening to the pre-determined position on the orifice track to engage the compliant member and allow fluid displacement within a powertrain mount.

12. The method of claim 10, further comprising:
aligning the rotatable track member opening to a position on the orifice track to disengage the compliant member and allow fluid flow within the orifice track (450).

13. A powertrain mount comprising:
a base plate (12) connected to a molded member defining a cavity;
an orifice plate (20) connected to one of the base plate (12) or the molded member (14) wherein the orifice plate (20) spans the cavity defining a primary chamber and a secondary chamber, the orifice plate having an opening (28), a first surface (22) sloping toward the opening (28), and an inner surface (24);
a rotatable track member (30) having an outer surface (34) proximate the first surface (22) of the orifice plate (20), the outer surface (34) of the rotatable track member (30) having an opening (36);
a containment plate (40) attached to the orifice plate (20) retaining the rotatable track member (30) against the orifice plate (20), the containment plate (40) forming an orifice track with the first (22) and inner (24) surfaces of the orifice plate (20) and with the outer surface (34) of the rotatable track member (30);
a compliant member (50) positioned adjacent to the orifice track, wherein the orifice track and the compliant member (50) receive varying volumes of fluid determined by rotation of the rotatable track member (30) and compressions of the mount; and
a motor (62) engaged with the rotatable track member (30) and adapted to rotate the rotatable track member (30).

14. The powertrain mount of claim 13 further comprising a housing member (50) formed within the orifice plate (20) wherein the housing member (29) confines the compliant member (20) within the orifice track.

15. The powertrain mount of claim 14 further comprising:
an encoder (64) operably attached to the motor (62) for measuring and communicating an angular position of the rotatable track member (30); and
a controller operably coupled to the encoder (64); wherein the controller determines vibration disturbance frequencies and communicates with the encoder (64) to activate the motor (62) to rotate the rotatable track member (30) and align the opening of the rotatable track member (30) with the compliant member (50) to allow fluid flow through the rotatable track member opening (36), the orifice track, and the orifice plate opening (28).

16. The powertrain mount of claim 13 wherein the compliant member (50) further comprises a dimension substantially traversing a width of the orifice track and minimally traversing the length of the orifice track.

17. The powertrain mount of claim 13 wherein the compliant member (50) comprises a material having a compliance less than a compliance of the molded member (14).

18. The powertrain mount of claim 13 wherein the compliant member (50) is made of a rubber bladder having an open cavity (52) for compensating for displaced fluid within the mount.

19. The powertrain mount of claim 13 wherein the compliant member is a sealed cup (54) including a spring reinforcement (56) for compensating for displaced fluid within the mount.
